(19) **Europäisches Patentamt**
**European Patent Office**
**Office européen des brevets**

(11) **EP 2 419 703 B1**

(12) **EUROPEAN PATENT SPECIFICATION**

(45) Date of publication and mention
of the grant of the patent:
**20.03.2013 Bulletin 2013/12**

(51) Int Cl.:
***G01J 5/60*** (2006.01)   ***G01N 21/35*** (2006.01)

(21) Application number: **10714565.8**

(86) International application number:
**PCT/DK2010/000047**

(22) Date of filing: **16.04.2010**

(87) International publication number:
**WO 2010/118750 (21.10.2010 Gazette 2010/42)**

(54) **GAS SENSOR UTILIZING BANDPASS FILTERS TO MEASURE TEMPERATURE OF AN EMITTER**

GASSENSOR MIT BANDPASSFILTER ZUR TEMPERATURMESSUNG EINER STRAHLENQUELLE

CAPTEUR DE GAZ UTILISANT UN FILTRE PASSE-BANDE POUR MESURER LA TEMPERATURE D'UN EMETTEUR

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **17.04.2009 DK 200900508**

(43) Date of publication of application:
**22.02.2012 Bulletin 2012/08**

(73) Proprietor: **Danfoss Ixa A/s**
**7100 Vejle (DK)**

(72) Inventors:
• **STOLBERG-ROHR, Thomine**
**DK-7100 Vejle (DK)**
• **JENSEN, Jens Møller**
**DK-8700 Horsens (DK)**
• **KRISHNA, Arun**
**DK-8381 Tilst (DK)**
• **MUNCH, Lars**
**DK-6580 Vamdrup (DK)**
• **BUCHNER, Rainer**
**DK-7080 Børkop (DK)**
• **MOOS, Henrik Gedde**
**DK-7000 Fredericia (DK)**

(74) Representative: **Knoblauch, Andreas**
**Patentanwälte Dr. Knoblauch**
**Schlosserstrasse 23**
**60322 Frankfurt am Main (DE)**

(56) References cited:
**EP-A1- 0 462 901**       **WO-A2-93/09413**
**GB-A- 1 220 814**        **US-A- 5 081 998**
**US-A- 5 650 624**        **US-A- 5 995 008**
**US-A1- 2003 147 080**    **US-A1- 2008 283 753**

# Description

The invention relates to a sensor having a filter arrangement, downstream of which there is arranged a detector arrangement, and an evaluating device which is connected to the detector arrangement, the filter arrangement has at least a first filter, the suspect filter, which is configured as a band pass filter allowing the passage of a first predetermined band, the suspect band, at least one second filter, the reference filter(s), which is configured as band pass filters allowing the passage of a second predetermined band(s), the reference band(s), and where the detector arrangement has at least one detector associated with the at least one of the filters. The sensor uses the band pass filters to measure the temperature of an emitting source. The sensor with advantage could be utilized within the IR band, and could advantageously be used to detect $CO_2$.

## BACKGROUND

Such a sensor, which is configured as a gas sensor, is known, for example, from US 5,081,998 A. An IR radiation source is provided therein, which acts upon a total of four detectors by way of a filter arrangement. The filter arrangement has two filters having different pass characteristics. A first filter has a pass band for IR radiation that is absorbed by $CO_2$. That filter is therefore also referred to as a "$CO_2$ filter". The detectors arranged downstream are designated $CO_2$ detectors. The other filter has a pass band different therefrom which serves for determining a reference quantity. The detectors arranged downstream of that reference filter are referred to as reference detectors. Between the IR source and the two filters there is arranged a third filter which is referred to as a natural density filter and overlaps half of the first filter and half of the second filter. Accordingly, one of the two $CO_2$ detectors and one of the reference detectors receives only IR radiation that has passed both through the natural density filter and through either the $CO_2$ filter or the reference filter. In the evaluating device, the difference of the output signals of the two $CO_2$ detectors and the difference of the two reference detectors is formed. The two differences are then divided by one another. Such a $CO_2$ sensor is required, for example, for determining $CO_2$ in a patient's breath so as to be better able to monitor the patient during anaesthesia.

A disadvantage of such sensors is that they have a relatively high power requirement, and another disadvantage is the number of detectors required. The arrangement known from US 5,081,998 A requires a source of radiation which, in any case for prolonged use, makes it unsuitable for battery-operated use. Furthermore, such an IR source generally requires a certain heating-up period, so that without a degree of prior preparation it is not always possible to carry out measurements when desired.

The problem underlying the invention is to simplify the use of an IR sensor, which is introduced in the sensor described in US 2008/0283753, wherein the pass band of a first filter is arranged within the pass band of a second filter and the evaluating device forms the difference of the signals of the detectors and normalises it to the signal of a detector.

That configuration makes it possible to evaluate substantially more IR radiation. The IR radiation is therefore not divided into two separate ranges, with each detector detecting only one range. Instead, one detector detects IR radiation having a pre-set spectral range, which also includes, for example, the absorption spectrum of the gas being determined, here $CO_2$. The other detector detects an IR spectrum from a sub-range thereof, which does not include the absorption spectrum of the gas being determined. The sensitivity of the sensor is thus considerably increased, that is to say only relatively low demands are made for the supply of IR radiation to the sensor. Because the difference between the output signals of the detectors is formed, an interfering signal, for example background noise or the like, is eliminated. The normalisation of the difference to the output signal of a detector enables fluctuations in the intensity of the IR radiation to be compensated. It is also possible to use more than two sensors with a correspondingly greater number of filters, the individual pass ranges then overlapping accordingly. With such a sensor it is also possible to obtain other information, for example relating to temperature, to movement in the room, to the number of persons in the room, etc.. Because it is possible to detect substantially more radiation, the power consumption can be reduced, so that the necessary power can also be supplied by a battery. That in turn gives greater freedom in terms of local mounting and use. The sensor can transmit its signals wirelessly.

The pass band of the first filter is preferably larger than the pass band of the second filter. Accordingly, the first filter, in addition to including the spectral range allowed to pass by the second filter, also includes the spectral range in which IR radiation is absorbed.

The two filters preferably have a common cut-off wavelength. That simplifies evaluation. The difference between the output signals of the detectors can then readily be formed without additional calculation steps being necessary. The cut-off wavelengths are the wavelengths that define, that is to say limit, the pass bands. They are referred to as "lower wavelength" and "upper wavelength".

It is however a known situation, that the amount as well as the spectral distribution of radiation of a emitter has a dependence of the temperature of the emitter. This is given by the well known Planck's distribution of radiation. Given a temperature of the emitter, a Planck curve then gives the dependence of the radiation to the wavelength, where the Planck curves has a maximum radiation at some wavelength, the maximum radiation value as well as the wavelength of the maximum radiation being temperature dependent..

Using a natural source in sensor systems such like the one described in for example US 2008/0283753, would make the pass bands of the filters change in energy (or in other words, the radiation intensity density) over the band of wavelengths. The temperature of such a natural source is usually not known, and even less controllable.

This construction is able to compensate for changes in the intensity of radiation of the light source, however, is not robust to for example temperature changes of the light source.

US-A-5650624 discloses a passive source infrared gas detector which uses an ambient temperature source and the space between the detector assembly and the source as the sample chamber is provided, the gas detector includes an infrared detector assembly for producing a first output, a second output, and a third output, the first output being indicative of the radiation received by the detector assembly at a first non-neutral spectral band which is absorbable by a preselected gas to be detected, the second output being indicative of the radiation received by the detector assembly at a first neutral spectral band from the passive infrared source, and the third output being indicative of the radiation received by the detector assembly at a second neutral spectral band from the passive infrared source. Signal processing means are included for manipulating the three outputs to determine the concentration of the gas being monitored. By adding additional detectors to the detector assembly which can detect radiation at spectral bands characteristic of additional gases, the infrared gas detector can be used to monitor the concentration of a plurality of gases.

US-A1-2003/147080 discloses an apparatus and method for open-path gas detection. The apparatus includes a radiation source and first and second radiation detectors sensitive to radiation in first and second spectral bands. The long cut-off wavelength of the second spectral band is longer than the long cut-off wavelength of the first spectral band, and the short cut-off wavelength of the second spectral band is shorter than the short cut-off wavelength of the short spectral band, such that the second spectral band is wider than and completely overlaps the first spectral band. Radiation from the radiation source passes through the area to be checked for gas, and is partially absorbed if gas is present. The path between the radiation source and the first and second radiation detectors need not be enclosed, and may exceed 100 meters in length. A processor compares intensity signals from the radiation detectors with a threshold value, and generates an output signal indicating a presence of gas based on the comparison. The method includes the steps of passing radiation through an area, and sensing radiation that has passed through the area within first and second spectral bands, wherein the long cut-off wavelength of the second spectral band is longer than the long cut-off wavelength of the first spectral band, and the short cut-off wavelength of the second spectral band is shorter than the short cut-off wavelength of the short spectral band. The intensities in the spectral bands are compared with a threshold value, and the presence of gas is indicated based on the comparison.

It is the object of the present invention to introduce methods to solve these problems of the present sensors, and a sensor utilizing the solutions, by introducing a way of estimating the temperature of the source.

## SUMMARY

It is therefore one object of the present invention to introduce a method to at least estimate the temperature of the emitter source, and to use this to correct or adjust the measurements of the sensor.

The present invention solves these problems by using a server according to claim 1. The suspect filter and the reference filter (s) have different cut-off wavelengths. The "lower wavelength" is the lowest wavelength from which the filters allow passage of radiation, and the "upper wavelength" is the highest wavelength higher that the lower wavelength, from which the filters shuts off passage of radiation.

The ranges of allowed wavelengths of the suspect filter(s) are in the following being referred to as the "suspect band(s)", and the allowed wavelengths of the reference fitters are in the following being referred to as the "reference bands".

As written, the suspect lower wavelength in the present invention is different to the reference lower length(s), and the suspect upper wavelength is different to the reference upper wavelength(s). This has the advantage that changes, such like the spectral distribution of the intensity of the incoming radiation, for example caused by temperature fluctuations of the source, can be compensated by distributing the reference bands above and below the suspect band. In one preferred embodiment of the present invention, this distribution is so that by a change in temperature, the increase in radiation intensity (or intensity density or energy) over the reference band roughly equals the increase in radiation intensity (or intensity density or energy) over the suspect band.

In one alternative or additional embodiment, the mean value, or average, of the radiation intensity density (or energy) over the suspect band roughly equals the mean value, or average, of the radiation intensity density (or energy) over each of the reference bands.

In one alternative or additional embodiment, the radiation intensity density (or energy) over the suspect band roughly equals the mean value, or average, of the radiation intensity density (or energy) over the whole of the combined reference bands. (the 'reference filter system band' is the combined reference bands of all the reference filters).

In another alternative or additional embodiment, the radiation intensity density (or energy) over the suspect band roughly equals the mean value, or average, of the radiation intensity density (or energy) of one of or each of the reference bands.

In yet another alternative or additional embodiment, the radiation intensity density (or energy) roughly is the same for each of the reference bands.

Measuring the average radiation at two relatively narrow bands of wavelengths would make it possible by Planck's law to make an estimation of the temperature of the emitter. This is for example done by identifying the correct Planck curve so to speak, and thereby calculating the temperature.

This is the main idea of the present application, where either the suspect and reference filter(s) in cooperation or reference filters alone, may form such bands for temperature estimation. The temperature measurements can be used to compensate the temperature dependency in gas measurements and thereby gain more accuracy in measuring the gas concentration.

The filters of the present invention may be formed by filter elements in series, or by one single filter element operating both as suspect filter and reference filter(s). When two or more filters are arranged as filter elements in series, they are arranged one after the other in the radiation direction, that is to say between the radiation source(s) and the detectors.

The sensor with advantage may operate within any radiation wavelength, and the source may be any radiation source.

The example in the following describes a sensor for determining the $CO_2$ content in an environment where a IR source would be preferred as light source, however, any other substances than $CO_2$ would also apply to the present invention, just as any other light source than within the IR band would apply.

In a further embodiment of the present invention, at least one reference filter (to be called the first reference filter) has a reference band, called the first reference band, with a wider span of wavelengths than the suspect band, where the first reference lower wavelength of this first reference filter is at a lower wavelength than the suspect lower wavelength, and the first reference upper wavelength of this first reference filter has a higher wavelength than the suspect upper wavelength. In this manner, the suspect band overlaps the first reference band.

In this embodiment, the centre wavelength of the first reference band (the first centre reference wavelength) and the centre wavelength of the suspect band may be the same, or may be different.

For a change in temperature, the relative change in intensity in the suspect and reference band must be equal in order for the temperature dependency to cancel out.

When using radiation sources, actively powered or natural the relative change in intensity depends unlinearly on the wavelengths spanned by the bands. Therefore the unmatching centre wavelength can be introduced to improve stability to temperature drift.

In this example, the reference filter(s) advantageously has a pass band that is from 0.2 to 1 $\mu$m greater than the pass band of the suspect filter. It is desirable for the suspect filter to cover basically only a relatively narrow wavelength range or spectral range of the radiation spectrum, for example the range in which IR radiation is absorbed by $CO_2$. The range indicated is sufficient for this. The risk that absorption by other gases will have an adverse effect on the measurement result and falsify that result is kept small.

It is preferable here for the first reference filter to have a pass band in the range from 4 to 4.5 $\mu$m and the suspect filter to have a pass band in the range from 4.1 to 4.4 $\mu$m. In dependence upon the gases or other quantities being detected, those spectral ranges can of course also be shifted.

In another preferred embodiment of the present invention, the system comprises a first and a second reference filter with a first and second reference band respectively (together constituting the combined reference bands), where the first and second reference bands are non-overlapping, meaning they span no common wavelengths. This may be an advantage if there are other gasses etc. in the environment than the gas(ses) of interest, with absorption bands in the vicinity of the suspect band, that could influence the measurements, in that it is difficult to avoid overlapping a reference band with such 'pollution' bands . By ensuring that at most one references band is affected by such a 'polluting' absorption band, it will be known that at least the other is unaffected.

In one preferred version of this embodiment, at least one of the first or second reference bands overlaps the suspect band, meaning that the first reference upper wavelength is at a higher wavelength than the suspect lower wavelength, and/or the second reference lower wavelength is at a lower wavelength than the suspect upper wavelength, but at a higher than the first reference upper wavelength, thus leading to the first and second reference bands extending at each side of the suspect band, but without overlapping.

In another example, the first reference upper wavelength is at a lower wavelength than the suspect lower wavelength, and the second reference lower wavelength is at a higher wavelength than the suspect upper wavelength, thus leading to the first and second reference bands extending at each side of the suspect band.

In an alternative embodiment, the first and second reference bands are overlapping having at least one common wavelength.

In an especially preferred configuration, the sensor uses the natural radiation, such as IR radiation, from the environment. There is therefore no need for a source of radiation that needs a separate power supply and accordingly has a certain power requirement. IR radiation is generally present everywhere, even when there is no incident sunlight. In principle every body emits a certain amount of thermal radiation. Because it is then possible to do without an IR radiation source, the "measurement range" is also broadened, that is to say it is possible to monitor relatively large areas of a room for the content of the gas in question. This facilitates the monitoring and establishment of a "personal room climate" or the indoor air quality. It is unnecessary first to conduct the air in the room to a sensor where it is passed between the source of IR radiation and the detectors with upstream filters. It is sufficient for the sensor to be arranged at a point in the room where it can, as it were, "survey" the volume of air to be monitored. In that case, the gas sensor can, as it were, detect the averaged gas concentration in a simple way. The sensor therefore determines an average value, which, particularly for the personal room climate, constitutes a substantially better measurement result. Of course, it is also possible to use the sensor to improve the technology of sensors that operate with lamps or other means of lighting. When natural or ambient IR radiation is used, the energy of the light means can be reduced. That results in longer maintenance intervals and a longer service life.

The evaluating device preferably normalises the difference to the signal of the first detector. In other words, for normalisation the signal containing for example the $CO_2$ content is used. That procedure results in a somewhat greater dynamic performance.

The ability for the sensor to react to changes in the temperature of the source is especially relevant for normalisation, since the normalization only works at a certain temperature, and the filter setup typically is made only for a certain temperature range. In order to cover a wider temperature range, a compensation routine is implemented by exactly deriving the temperature of the emitter. Furthermore the information derived can be used in a self-check algorithm when not using a natural light source, to estimate if the lifetime of the emitter, or light source, is exceeded or close to exceed.

The filters preferably contain $CaF_2$, germanium or silicon. The filter and any other parts of the sensor device where it would make sense, preferably has an anti-reflective coating in order to improve transmission.

The invention will be described herein below with reference to a preferred exemplary embodiment in conjunction with the drawings.

FIGURES

Fig. 1 and 2     illustrates a bands on a Planck curve

Fig. 3     is a diagrammatic view for explaining the operating principle of the present invention;

Fig. 4A-E     shows, in diagrammatic form, pass bands of two or three filters without any wavelength dependence of the radiation intensity shown.

Fig. 5     shows, in diagrammatic form, the amount of energy that can be detected by detectors;

Fig. 6A-D     is a block circuit diagrams for explaining different embodiments of the structure of the sensor;

DETAILED DESCRIPTION OF THE SYSTEM

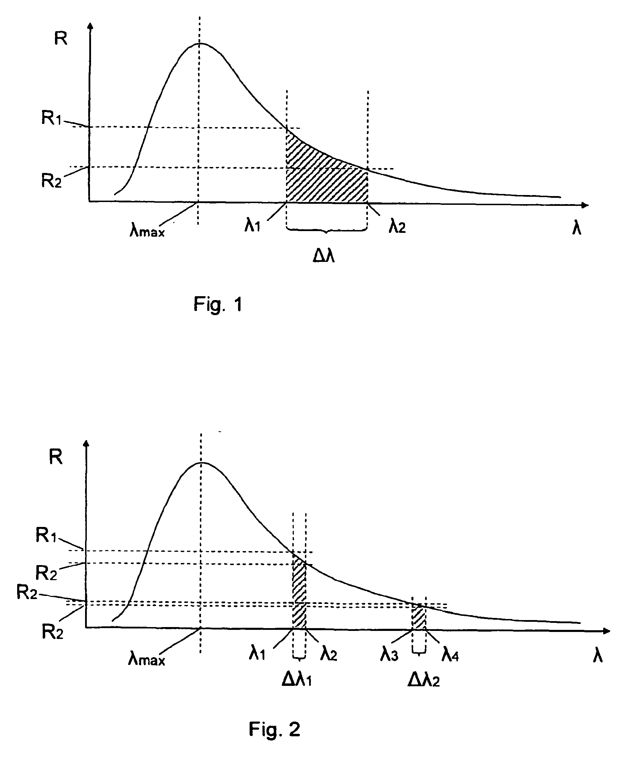

Fig. 1 illustrates a general Planck curve having a maximum radiation at the wavelength $\lambda$max, and having a continuously decreasing radiation for increasing wavelengths above $\lambda$max, so using a band $\Delta\lambda$ between two such wavelengths $\lambda 1$ and $\lambda 2$. The radiation R1 at the lower wavelength $\lambda 1$ being larger than the radiation R2 at the upper wavelength A2.

This would give problems when using such a band $\Delta\lambda$ in a measurement, since a change of intensity in that band might either be due to a simple change in intensity of the incoming light, or due to a change of the temperature of the emitter.

Fig. 2 shows the same Planck curve, but where two bands $\Delta\lambda 1$ and $\Delta\lambda 2$ are seen. Knowing the average radiation in such two bands makes it possible by Planck's distribution of radiation to make an estimation of the temperature, by calculating the ratio of the signal of these two bands, assuming that there is no absorption taking place that affects the radiation intensity reaching the detector.

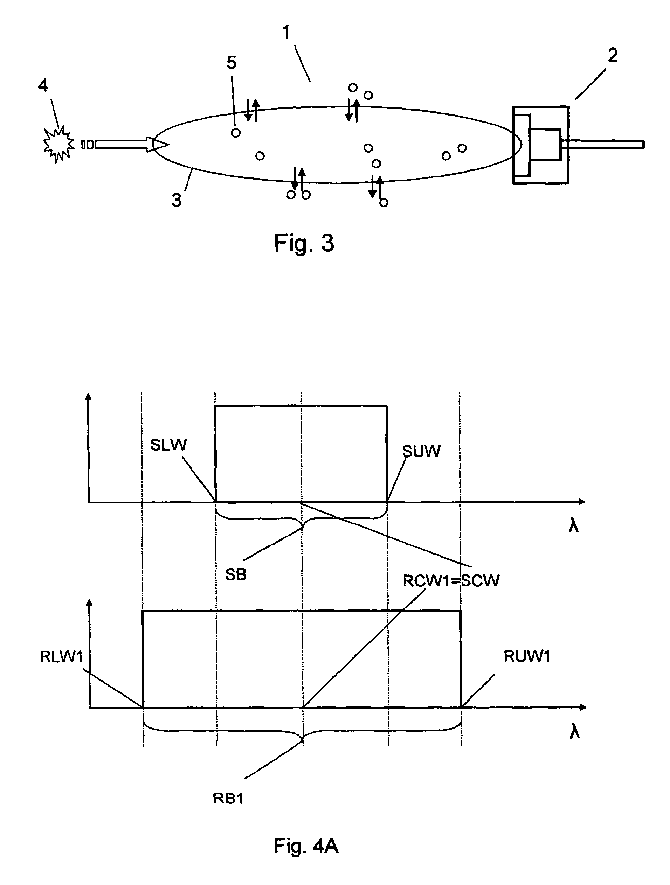

Fig. 3 shows a diagrammatic view of a gas sensor (1) for determining for example the $CO_2$ content (carbon dioxide content) in a measurement region (3), where the sensor (1) comprises a detection part (2). The measurement region may be, for example, a room or the portion of a room in which the personal room climate is to be regulated. A sun symbol (4) represents a radiation source, such as for example a natural IR source, passive sources, or any imaginable active source (sunlight, laser, light diodes, controlled hated sources etc.) The sun symbol (4) serves here merely for explanation purposes. The gas sensor (1) also operates in the absence of sunlight, because in principle virtually any body radiates heat and thus generates IR rays.

In the example, a large number of $CO_2$ molecules are present in the measurement region (2), the $CO_2$ molecules being represented herein by small circles. The gas molecules (4) absorb IR rays in a specific spectral range, as represented by arrows (5). The greater the concentration of $CO_2$, the lower the energy in a specific spectral range that can be detected in the gas sensor (1).

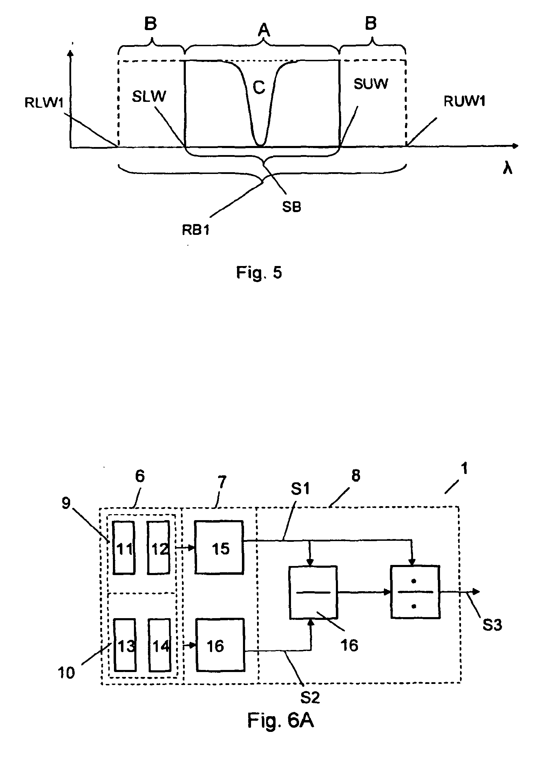

Fig. 6A shows, in diagrammatic form, a block circuit diagram for explaining the structure simple detecting part (2) of a gas sensor (1). The detecting part (2) has a filter arrangement (6), a detector arrangement (7) and an evaluating device (8). Further details, such as the housing, fixing means or the like, are not shown herein.

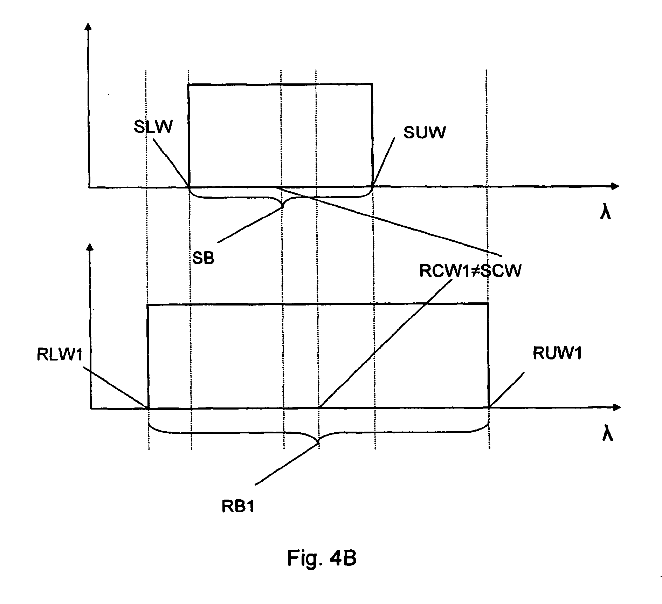

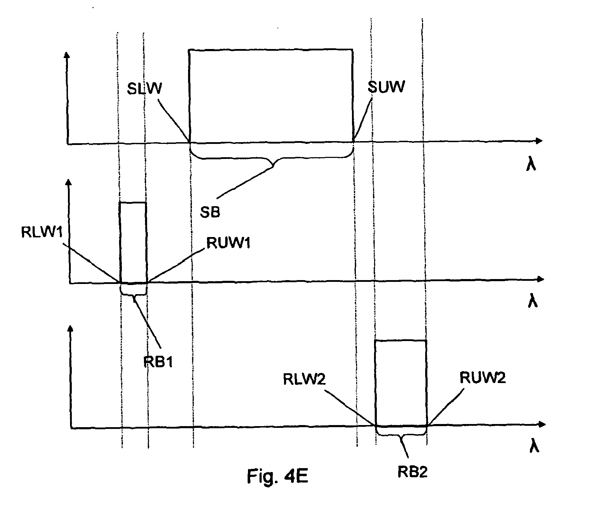

The shown filter arrangement has a first reference filter (10) and a suspect filter (9), where the two filters (9) and (10) have different pass characteristics, where one embodiment is shown in Fig. 4A. The first reference filter (10) allows passing of wavelengths within the firsts reference band RB1, and the suspect filter (10) allows the passing of wavelengths within the suspect band SB. In the following figures the radiation dependence of wavelength is not seen. The embodiment in Fig. 4B shows the first reference band RB1 spanning wider than the suspect band SB, but where the suspect band SB overlaps the first reference band RB1 in such a manner, that the first reference band RB1 comprises the same wavelengths as the suspect band SB. The first reference lower wavelength RLW1 therefore is at a lower wavelength than the suspect lower wavelength SLW, and the first reference upper wavelength RUW1 has a higher wavelength than the suspect upper wavelength SUW. The first reference band RB1 has a first centre wavelength RCW1, and the suspect band has a suspect centre wavelength SCW. The figure shows the two bands having a common centre wavelength RCW1 and SCW.

Fig. 4B shows a related embodiment to that shown in Fig. 4A, only where they dissimilar centre wavelengths RCW and RCW1. For a change in temperature, the relative change in intensity in the suspect and reference band must be equal in order for the temperature dependency to cancel out. When using radiation sources, actively powered or natural the relative change in intensity depends unlinearly on the wavelengths spanned by the bands. Therefore the unmatching centre wavelength can be introduced to improve stability to temperature drift.

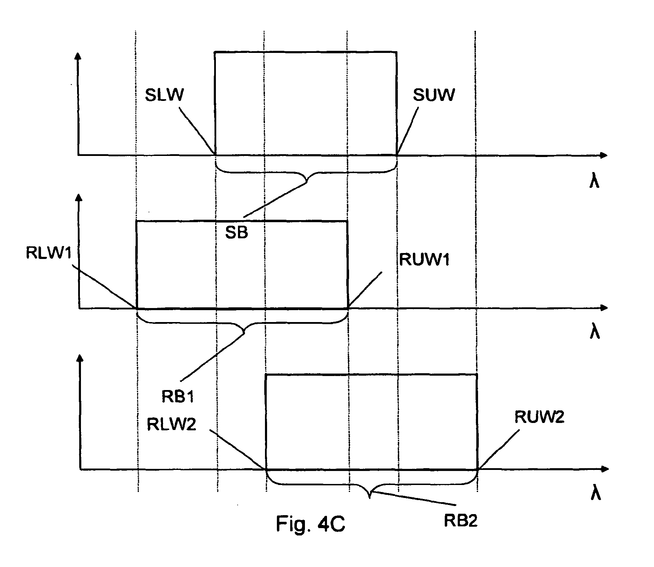

Fig. 4C shows another embodiment where a second reference filter (20) has been introduced into the system spanning over a second reference band RB2 extending from a second reference lower wavelength RLW2 to a second reference upper wavelength RUW2. The shown embodiment further has the suspect band SB only partly overlapping both the first and second reference bands RB1 and RB2 in such a manner, that the suspect lower wavelength SLW is between the first reference lower wavelength RLW1 and the first reference upper wavelength RUW1. The suspect upper wavelength SUW is between the second reference lower wavelength RLW2 and the second reference upper wavelength RUW2. The shown embodiment has the first reference upper wavelength RUW1 being higher than the second reference lower wavelength RLW2, but in other embodiments the first and second reference bands RB1 and RB2 might not overlap, meaning that the first reference upper wavelength RUW1 would be lower than the second reference lower wavelength RLW2.

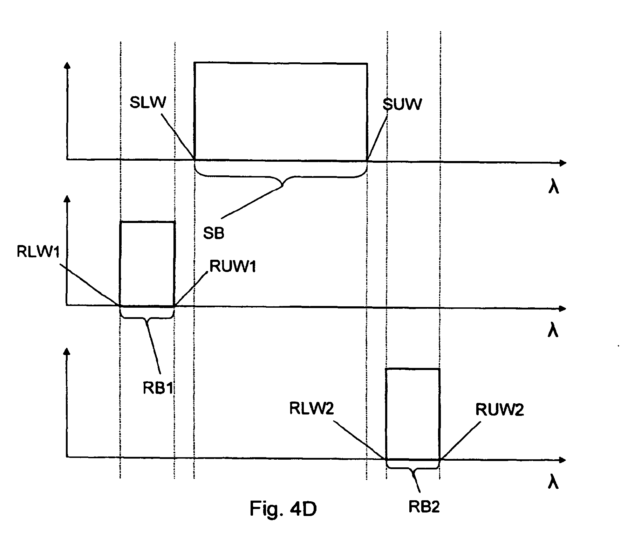

Fig. 4D shows an example with two reference filters (10 and 20), where none of the reference bands RB1 and RB2 at least substantially overlaps the suspect band SB, at least, but extends at each side of it, here meaning, that the first reference upper wavelength RUW1 is not higher than the suspect lower wavelength SLW, but could optionally be the same, and the second reference lower wavelength RLW2 is not lower than the suspect upper wavelength SUW, but could optionally be the same. The figure shows the two reference bands RB1 and RB2 having substantially the same pass range of wavelengths, but as seen in Fig. 2E this may not be the case, the two reference bands RB1 and RB2 might have very different pass ranges of wavelengths.

The relative positions and sizes of the bands depends on a number of factors, such as the tolerances of the edges of the filters, the width of the suspect band pass, the distribution of the absorption lines of the suspect band, and of any other gasses that might cause cross sensitivities.

In the example of the sensor (1) operating as a $CO_2$ sensor, there is a spectral range $\lambda$ ($CO_2$) in which IR radiation is absorbed by $CO_2$. That spectral range is located at about from 4.2 to 4.3 $\mu$m. Accordingly, the suspect band SB could with advantage have a suspect lower wavelength SLW at about 4.0 $\mu$m and a suspect upper wavelength SUW at about 4.5 $\mu$m, or with an even more narrow range of the suspect band from 4.1 $\mu$m - 4.4 $\mu$m, or any other band covering the spectral range of $CO_2$ The reference start and upper wavelengths then with advantage could extend about 0.5 $\mu$m above and below the suspect lower wavelength SLW and suspect upper wavelength SUW respectively.

Fig. 5 illustrates a first reference band RB1 and the suspect band SB of the first embodiment of the invention as seen in Fig. 3, where the suspect band has a unreduced energy indicated by reference letter A. That energy is reduced by an amount C which is absorbed by for example $CO_2$. The two sections of the first reference band RB1 extending at each side of the suspect band each has an energy indicated by reference letters B. That energy is virtually constant, because it is not affected by for example $CO_2$.

The different energies are then detected by the detector arrangement (7). The detector arrangement (7) has a first detector (15) which detects the for example IR radiation which passes through the suspect filter (9), and a second detector (16) which detects the for example IR radiation which passes through the first reference filter (10). The two detectors (15), (16) can be in the form of thermoelectric elements which are also known as "thermopiles". In dependence upon the for example IR radiation that occurs, each detector generates a voltage or a current, that is to say an electrical quantity, which is the greater the more IR radiation is incident. Accordingly, the first detector (15) generates a signal S1 and the second detector (16) generates a signal S2.

A thermopile sensor is obtainable, for example, from PerkinElmer Optoelectronics GmbH, D-65199 Wiesbaden, Germany.

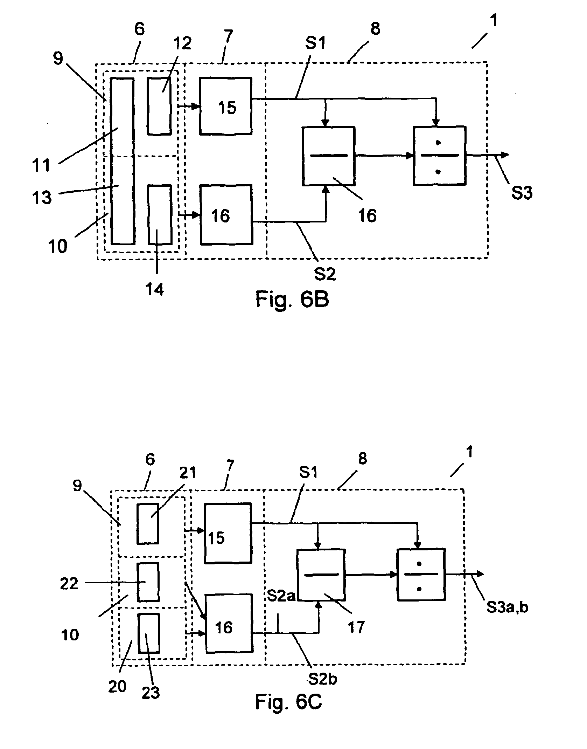

Fig. 6A shows one simple embodiment of a construction of a filter arrangement (6), where the suspect filter (9) comprises two filter elements (11) and (12), the first suspect filter element (11) defining the suspect upper wavelength SUW and having a lower wavelength lower than the suspect lower wavelength SLW. The second suspect filter element (12) defines the suspect lower wavelength SLW and has an upper wavelength substantially higher than the suspect upper wavelength SUW. In the same manner the first reference filter (10) comprises two filter elements (13) and (14) defining the first reference upper wavelength RUW1 and the first reference lower wavelength RLW1 respectively. Depending on the number of filters like (9) and (10) introduced into the system, any number of such constructions of filter elements (11), (12), (13) and (14) may be introduced into the filter arrangement (6). Some filter elements in this and any other embodiment may be common to two or more of the filters when the filters have the same end and/or lower wavelength, this being illustrated in Fig. 6B, where the two 'upper' filter elements (11) and (13) is one common filter element.

Fig. 6C shows a similar sensor having a extra reference filter, the second reference filter (20), and where each filter only has a single filter element (21, 22, 23) comprising the desired band pass characteristic both for the upper and lower wavelengths, the suspect filter (21) thus both defining both the suspect lower wavelength SLW and upper suspect wavelength SUW. The first reference filter (22) defining both the first reference upper and lower wavelengths RUW1 and RLW1, and the second reference filter (23) defining both the second reference upper and lower wavelengths RUW2 and RLW2. The two filter elopements (22, 23) are in this illustrated embodiment connected to the same detector (16) though in reality what would be none, is to add their signals mathematically after they have been acquired by for example two separated Thermopiles.

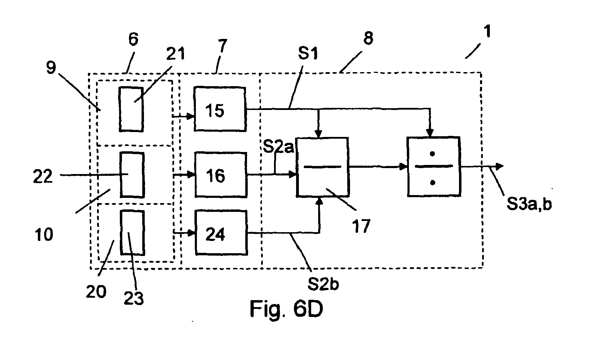

Fig. 6D shows an embodiment related to that of Fig. 6C, only where a third detector (24) is connected to the second reference filter (20).

It shall be noted that any combination, permutation, number and positioning of filter elements (11, 12, 13, 14) as for example disclosed in Figs. 5A-D would apply to the present invention.

In general the sensor could also be used to measure more than one gas, then just including the needed number of sensors, detectors etc., as it will be known to a craftsman.

Because, in a thermopile sensor, usually a temperature measurement is carried out (because the output signal varies with temperature), measurement of the temperature around the sensor has already been incorporated. As it is conceivable that the radiation temperature of the room is also obtainable by means of the sensor, it is possible on the basis of those two measurements simultaneously to obtain directly an operating temperature which can then be used for controlling the room temperature or something quite different.

In connection with IR it is also conceivable that measurement of a movement in the room is directly possible with the sensor, which can then be used, for example, for controlling a ventilating system, which, for example, is activated only in the event of a movement indicating that there is someone in the room. On the basis of various movement measurements it is also conceivable that it would be possible to estimate the number of people in the room, such an estimate also being usable for control purposes, so that the room temperature or the ventilation is controlled / modified in dependence upon the number of people in the room.

The basic sensor of this invention such as the one seen in fig. 6A operates by the two signals S1, S2 being supplied to the evaluating device (8). Accordingly, this gives

$$S1 = a \left( I_{CO_2 n} \right)$$

$$S2 = a \left( I_{refn} \right)$$

where $I_{CO_2}$ is the electrical quantity, for example the current or the voltage, containing the information relating to the IR absorption, while $I_{ref}$ is the reference quantity that is not affected by the IR absorption. When the difference between S1 and S2 is formed (the "effective reference" being the part of the reference band which does not include the suspect band), for which purpose a difference former (17) is shown diagrammatically, the following quantity is obtained:

$$S1 - S2 = a \left( I_{CO_2} - I_{ref} \right)$$

That difference S1 - S2 is normalised to the output signal S1 of the first detector (15), so that a signal S3 is obtained.

$$S3 = \frac{S1}{\text{effective Reference} = (S2 - S1)} = \frac{a(I_{CO_2})}{a(I_{Ref})}$$

The sensor of this invention may be used to measure any kinds of gases, such like for example nitrogen, nitric oxides, oxygen or CO, and is not even limited to measure gasses, but may also be used to measure the suspect in other forms like liquids and solids. When changing suspect from $CO_2$, the pass bands would have to be shifted accordingly, for example the absorption band of H2O is around 2.7 $\mu m$

Knowing the temperature of the emitter, or light source, makes it possible to corrugate, or normalize, quantities like $I_{ref}$ and $I_n$, and/or signals like S1 and S2. so to speak removing the temperature, and/or by normalization removing the wavelength dependence of the bands like the suspect and reference bands.

The sensor of the present invention may further comprise any possible other optical components, for example a sapphire window, that acts as additional band pass filter, reflectors, a collecting device, being a device that gathers or focuses for example IR radiation, for example a collimator, positioned upstream of the sensor, etc.

It is also possible to use such a sensor directly for waste gas monitoring. For that purpose, it is installed in the chimney or exhaust. Particularly in the case of heating systems, combustion can then be controlled with the aid of the output signals of the sensor (or of a plurality of sensors).

This invention is not excluded to the above descriptions and drawings, any permutation of the above descriptions and drawings, including any number and permutations of filters such as suspect filters (9) and reference filters (10, 20), filter elements (21, 22, 23), detectors (15, 16, 24) etc. would also apply to the present invention.

Further, this invention is not excluded to measuring gasses, the sensor may as well be implemented in measuring substances in general being a part of a media, where the media is not excluded to be a gas it self, but could for example be a liquid.

## Claims

1. Sensor having a filter arrangement, downstream of which there is arranged a detector arrangement, and an evaluating device which is connected to the detector arrangement, the filter arrangement comprising a first reference filter and a second reference filter, the two filters having a first reference band and a second reference band respectively, whereby the sensor further has a suspect filter passing through radiation with wavelengths at least within a suspect band wherein first and second reference constitutes a reference system, and their reference bands constitutes a reference band system, where the suspect band and the first reference band have different centre wavelengths, and where the measured intensity densities in the first reference band and the second reference band is used to estimate the temperature of the radiation emitting source, **characterized in that** the reference band system is distributed on both sides of the suspect band and wherein the suspect band at least partly overlaps the reference system bands.

2. Sensor according to claim 1, wherein the suspect band at least partly overlaps both the first reference band and the second reference band.

3. Sensor according to any preceding claim, wherein the average or mean intensity density (or energy) of the first and the second reference bands are the same.

4. Sensor according to any preceding claim, wherein the average or mean intensity density (or energy) of the suspect band is the same as that of the first and second reference bands.

5. Sensor according to any preceding claim, wherein the sensor may comprise any number of suspect filters, with the respective number of suspect pass bands, and/or reference filters, with the respective number of reference pass bands, for measuring any number of different substances.

## Patentansprüche

1. Sensor mit einer Filteranordnung, wobei stromabwärts davon eine Detektoranordnung angeordnet ist, und ein Bewertungsgerät, das mit der Detektoranordnung verbunden ist, wobei die Filteranordnung ein erstes Referenzfilter und ein zweites Referenzfilter aufweist, wobei die beiden Filter je ein erstes Referenzband und ein zweites Referenzband aufweisen, und der Sensor außerdem ein Verdächtigtenfilter aufweist, der Strahlungen mit Wellenlängen durchlässt, die zumindest innerhalb eines Verdächtigtenbandes liegen, wobei der erste und der zweite Referenz ein Referenzensystem bilden, und ihre Referenzbänder ein Referenzbandsystem bilden, wobei das Verdächtigtenband und das erste Referenzband unterschiedliche Mittelwellenlängen haben, und wobei die gemessenen Intensitätsdichten im ersten Referenzband und im zweiten Referenzband angewandt werden um die Temperatur der Strahlungsquelle zu schätzen, **dadurch gekennzeichnet, dass** das Referenzbandsystem auf beiden Seiten des Verdächtigtenbandes verteilt ist und das Verdächtigtenband zumindest teilweise die Referenzsystembänder überlappt.

2. Sensor nach Anspruch 1, **dadurch gekennzeichnet, dass** das erste Verdächtigtenband zumindest teilweise sowohl das erste Referenzband als auch das zweite Referenzband überlappt.

3. Sensor nach jedem vorhergehenden Anspruch, **dadurch gekennzeichnet, dass** die durchschnittliche oder mittlere Intensitätsdichte (oder Energie) des ersten und des zweiten Referenzbandes gleich sind.

4. Sensor nach jedem vorhergehenden Anspruch, **dadurch gekennzeichnet, dass** die durchschnittliche oder mittlere Intensitätsdichte (oder Energie) des Verdächtigtenbandes gleich der der ersten und zweiten Referenzbänder ist.

5. Sensor nach jedem vorhergehenden Anspruch, **da-**

**durch gekennzeichnet, dass** der Sensor jede beliebige Anzahl von Verdächtigtenfiltern aufweisen kann, mit der zugehörigen Anzahl von Verdächtigtendurchlassbändern, und/oder Referenzfiltern, mit der zugehörigen Anzahl von Referenzdurchlassbändern, zur Messung jeder beliebigen Anzahl von unterschiedlichen Substanzen.

## Revendications

1. Capteur ayant un agencement de filtre, en aval duquel un agencement de détecteur est agencé, et un dispositif d'évaluation qui est connecté à l'agencement de détecteur, l'agencement de filtre comprenant un premier filtre de référence et un second filtre de référence, les deux filtres ayant une première bande de référence et une seconde bande de référence respectivement, dans lequel le capteur comprend en outre un filtre suspect passant à travers un rayonnement avec des longueurs d'onde au moins dans une bande suspecte où des première et seconde références constituent un système de référence, et leurs bandes de référence constituent un système de bande de référence, où la bande suspecte et la première bande de référence ont des longueurs d'onde centrale différentes et où les densités d'intensité mesurées dans la première bande de référence et la seconde bande de référence sont utilisées pour estimer la température de la source d'émission de rayonnement, **caractérisé en ce que** le système de bande de référence est distribué sur les deux côtés de la bande suspecte et où la bande suspecte recouvre au moins partiellement les bandes de système de référence.

2. Capteur selon la revendication 1, dans lequel la bande suspecte recouvre au moins partiellement à la fois la première bande de référence et la seconde bande de référence.

3. Capteur selon l'une quelconque des revendications précédentes, dans lequel les densités (ou énergies) d'intensité moyennes des première et seconde bandes de référence sont identiques.

4. Capteur selon l'une quelconque des revendications précédentes, dans lequel la densité (ou énergie) d'intensité moyenne de la bande suspecte est identique à celle des première et seconde bandes de référence.

5. Capteur selon l'une quelconque des revendications précédentes, dans lequel le capteur peut comprendre un nombre quelconque de filtres suspects, avec le nombre respectif de bandes passantes suspectes, et/ou des filtres de référence, avec le nombre respectif de bandes passantes de référence, afin de mesurer un nombre quelconque de substances différentes.

Fig. 1

Fig. 2

Fig. 3

Fig. 4A

Fig. 4B

Fig. 4C

Fig. 4D

Fig. 4E

Fig. 5

Fig. 6A

Fig. 6B

Fig. 6C

Fig. 6D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5081998 A
- US 20080283753 A
- US 5650624 A
- US 2003147080 A1